# EUROPÄISCHE PATENTANMELDUNG

(11) **EP 1 369 270 A1**
(43) Veröffentlichungstag der Anmeldung: **10.12.2003**
(21) Anmeldenummer: 03011715.4
(22) Anmeldetag: 23.05.2003
(51) Int. Cl.: B60H 3/06

(54) **Filtergehäuse**

(30) Priorität: 03.06.2002 DE 10224476
(71) Anmelder: ADAM OPEL AG, 65423 Rüsselsheim (DE)
(72) Erfinder: Brandel, Klaus, 65205 Wiesbaden (DE)

(57) **Zusammenfassung**

Ein Filtergehäuse (1,100,200) für ein Kraftfahrzeug umfasst einen das Filtergehäuse (1,100,200) durchsetzenden Filter (23), eine jeweils wahlweise verschließ- und freigebbaren Frisch- und Umluftöffnung (113,30,202 und 118,29,203) und eine Luftauslassöffnung, wobei der Filter zwischen der Frisch- und Umluftöffnung (113,30,202 und 118,29,203) und der Luftauslassöffnung (2,208) angeordnet ist und das Filtergehäuse (1, 100, 200) von einer Öffnung (2) in einer einen Innenraum (4) des Kraftfahrzeuges zu einem dem Motorraum (6) zugewandten Zwischenraum (5) abgrenzenden Stirnwand (3) aufgenommen ist. Die Frisch- und Umluftöffnung (113,30,202 und 118,29,203) sind mit einer eineigen, gemeinsamen Klappe (21,114,201) verschließbar.

## Beschreibung

Die Erfindung bezieht sich auf ein Filtergehäuse für ein Kraftfahrzeug mit einem das Filtergehäuse durchsetzenden Filter, mit einer jeweils wahlweise verschließ- und freigebbaren Frisch- und Umluftöffnung und mit einer Luftauslassöffnung, wobei der Filter zwischen der Frisch- und Umluftöffnung und der Luftauslassöffnung angeordnet ist und das Filtergehäuse von einer Öffnung in einer einen Innenraum des Kraftfahrzeuges zu einem dem Motorraum zugewandten Zwischenraum abgrenzenden Stirnwand aufgenommen ist.

Aus DE 100 12 972 C1 ist eine insbesondere zur Verbindung mit einer Heizungs- oder Klimaanlage geeignete Belüftungsvorrichtung für Fahrzeuge bekannt. Die Belüftungsvorrichtung weist ein Ansauggehäuse, das im Fahrgastraum des Fahrzeugs an einer den Fahrgastraum des von einem Motor- oder Aggregateraum trennenden Stirnwand gehalten ist, und eine jeweils wahlweise verschließ- und freigebbare Frisch- und Umluftöffnung auf. Weiterhin enthält die Belüftungsvorrichtung ein im Ansauggehäuse angeordnetes Gebläse zur Erzeugung eines Luftstroms über die Frisch- und Umluftöffnung und einen im Ansauggehäuse zwischen Frisch- und Umluftöffnung und dem Gebläse angeordneten Luftfilter. Die Belüftungsvorrichtung zeichnet sich dadurch aus, dass in der oberen Gehäusewand und/oder in der unteren Gehäusewand des Ansauggehäuses eine Filterwechselöffnung vorgesehen ist, durch die hindurch der Luftfilter aus dem Ansauggehäuse herausziehbar oder in das Ansauggehäuse einsetzbar ist. Außerdem ist das Ansauggehäuse durch eine Öffnung in der Stirnwand soweit hindurchgeführt, dass der die Frischluftöffnung und die obere Filterwechselöffnung enthaltende Gehäuseteil im Aggregateraum liegt und dass der die Umluftöffnung und die untere Filterwechselöffnung enthaltende Gehäuseteil im Fahrgastraum verbleibt. Nachteilig daran ist, dass der dem wechselseitigen Verschließen der Frischluft- und Umluftöffnung dienende Mechanismus sich sowohl im Innenraum als auch außerhalb der Stirnwand im Motor- oder Aggregateraum befindet.

Es ist Aufgabe der Erfindung, ein Filtergehäuse der eingangs genannten Art zu schaffen, bei dem der Mechanismus zum wechselseitigen Verschließen der Frischluft- und Umluftöffnung entweder vollständig vom Innenraum aus oder vollständig von außerhalb des Innenraumes zugänglich ist.

Erfindungsgemäß wird die Aufgabe dadurch gelöst, dass die Frisch- und Umluftöffnung mit einer Klappe verschließbar sind und dass sich die Klappe zum Schließen und/oder Freigeben der Umluft- und/oder der Frischluftöffnung nicht durch die Öffnung der Stirnwand hindurchbewegt.

Die Umluft- und die Frischluftöffnung sind derart in dem Filtergehäuse angeordnet, dass sich die Klappe zum Schließen und/oder Freigeben der Frisch- und/oder der Umluftöffnung jeweils nur in einem der durch die Stirnwand getrennten Räume bewegt. Eine Klappenbewegung zum jeweils wechselweisen Freigeben und Schließen der Frischluft- und der Umluftöffnung erfolgt entweder vollständig in dem Zwischenraum oder vollständig in dem Innenraum.

Die Erfindung bringt den Vorteil mit sich, dass ein konstruktionsbedingter, zwischen dem Motorraum und dem Innenraum eines Kraftfahrzeuges befindlicher Zwischenraum zur Aufnahme wesentlicher Teile der Steuerungseinrichtungen eines Filtergehäuses ausgenutzt wird. Ein zusätzlicher Vorteil liegt darin, dass eine Reparatur oder eine Reinigung des Mechanismus ohne Positionswechsel des Mechanikers einfach durchgeführt werden kann.

Bevorzugt befindet sich ein die Frisch- und Umluftöffnung enthaltender Teil des Filtergehäuses außerhalb des Innenraums. Hier ist von Vorteil, dass der Platzbedarf für das Filtergehäuse im Innenraum minimiert ist.

Bei einer alternativen Ausführungsform befindet sich ein die Frisch- und Umluftöffnung enthaltender Teil des Filtergehäuses innerhalb des Innenraums. Vorteilhaft hierbei ist es, dass bei einem bauartbedingten engen Zwischenraum unterhalb einer Frontscheibe eines Kraftfahrzeuges für die Frisch- und Umluftöffnungen und die zugehörige Klappe ausreichend Platz vorhanden ist. Zweckmäßigerweise ist die Klappe in einer ersten Stellung, in der sie die Umluftöffnung verschließt und die Frischluftöffnung freigibt, und in einer zweiten Stellung festlegbar, in der sie die Umluftöffnung freigibt und die Frischluftöffnung verschließt.

Vorzugsweise durchsetzt der Filter das Filtergehäuse im Zwischenraum oder im Bereich der Öffnung der Stirnwand. Der Filter kann durch eine Wechselöffnung des Filtergehäuses in dem Zwischenraum aus dem Filtergehäuse entnehmbar und/oder in das Filtergehäuse einbringbar sein. Die Wechselöffnung kann durch eine Abdeckklappe verschließbar sein.

In einer weiteren Ausführungsform kann der Filter aus dem Filtergehäuse durch eine weitere Wechselöffnung in den Motorraum entnommen und/oder in das Filtergehäuse eingebracht werden. In einer besonders bevorzugten Ausführungsform kann der Filter durch eine in einer den Zwischenraum und den Motorraum des Kraftfahrzeuges trennenden Wand angebrachten Austauschöffnung entnommen und/oder eingebracht werden, wobei die Austauschöffnung der weiteren Wechselöffnung gegenüberliegt. Die weitere Wechselöffnung und/oder die Austauschöffnung können durch eine Abdeckklappe verschließbar sein.

Der Filter kann das Filtergehäuse dort durchsetzen, wo das Filtergehäuse den größten Querschnitt aufweist. Der Vorteil liegt hierbei darin, dass ein großer Luftdurchsatz erreichbar ist, ohne dass ungefilterte Luft in den Innenraum geführt wird. Auch kann die Luftauslassöffnung zum Anschluss eines Gebläses ausgebildet sein.

Vorzugsweise wird die Klappe zum wechselseitigen Verschließen und Öffnen der Umluft- und der Frischluftöffnung auch durch einen Stellmotor angetrieben. Der in das Filtergehäuse einsetzbare Filter ist in bevorzugter Ausführung ein Luftfilter, der als Pollenfilter und/oder Staubfilter ausgelegt sein kann. Zur Verhinderung von Wassereintritt ist um die Frischluftöffnung ein Wasserabweiser angebracht.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

Die Erfindung wird im Folgenden anhand mehrerer Ausführungsbeispiele unter Bezugnahme auf die zugehörigen, in unterschiedlichen Maßstäben dargestellten Zeichnungen näher erläutert. Dabei sind in den Zeichnungen gleiche Teile mit den gleichen Bezugszeichen versehen. Es zeigen:
- Fig. 1: eine Schnittdarstellung eines erfindungsgemäßen Filtergehäuses,
- Fig. 2: eine Schnittdarstellung des Filtergehäuses nach Fig. 1 in einer ersten alternativen Ausführungsform und
- Fig. 3: eine Schnittdarstellung des Filtergehäuses nach Fig. 1 in einer zweiten alternativen Ausführungsform.

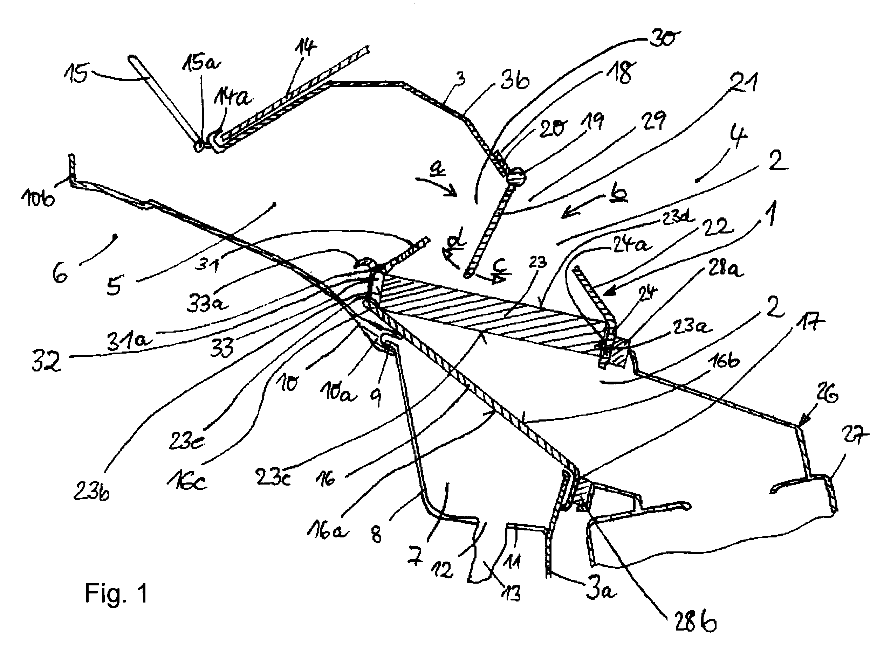

Nach Fig. 1 ist das im Ganzen mit dem Bezugszeichen 1 bezeichnete Filtergehäuse in eine Öffnung 2 einer Stirnwand 3 eingesetzt. Die nur teilweise dargestellte Stirnwand 3 trennt einen Innenraum 4 eines Kraftfahrzeuges von einem Zwischenraum 5, welcher sich zwischen dem Innenraum 4 und einem Motorraum 6 befindet. Der Zwischenraum 5 wird nach Fig. 1 zum Motorraum 6 hin durch eine einen muldenartigen Bereich 7, den so genannten Wasserkasten, begrenzende Wand 8 und eine sich an ein freies Ende 9 der Wand 8 anschließende Abdeckwand 10 begrenzt. Die Abdeckwand 10 ist dabei mit einem maulförmigen Endabschnitt 10a auf das abgewinkelte Ende 9 der aus Blech geformten Wand 8 geschoben. Der muldenartige Bereich weist an einem Bodenabschnitt 11 eine zum Ablauf von Flüssigkeit dienende Öffnung 12 auf, in die ein Ablaufschlauch 13 gelegt ist.

Die aus Kunststoff gefertigte Abdeckwand 10 ist an einem dem maulförmigen Endabschnitt 10a gegenüberliegenden Ende 10b an einem den Motorraum seitlich begrenzenden Karosserieelement (nicht gezeigt) einer Fahrzeugkarosserie befestigt. Zwischen einem Befestigungspunkt des Endes 10b der Wand 8 und einer Frontscheibe 14 des Kraftfahrzeuges befindet sich eine als Wasserabweiser dienende Abdeckung 15, welche am Ansatzbereich 14a der Frontscheibe 14 durch ein Scharnier 15a schwenkbar gehalten wird, das in der Fig. 1 in einer hochgeschwenkten Stellung gezeigt ist.

Das Filtergehäuse 1 ist gemäß Fig. 1 mit einer Außenseite 16a einer Seitenwand 16 innerhalb des Zwischenraumes 5 an den maulförmigen Endabschnitt 10a angelegt. Die Seitenwand 16 weist ein die Öffnung 2 durchdringendes abgewinkeltes Ende 17 auf, mit dem das Filtergehäuse 1 an einem zum Bodenbereich des Kraftfahrzeuges führenden Abschnitt 3a der Stirnwand 3 festgelegt ist. Das abgewinkelte Ende 17 ist Teil eines Anlagerahmens 18, mit dem das Filtergehäuse 1 vom Innenraum 4 des Kraftfahrzeuges her, die Öffnung 2 der Stirnwand 3 umgebend, an der Stirnwand 3 anliegt. Der Anlagerahmen 18 begrenzt eine in der Größe der Öffnung 2 der Stirnwand 3 entsprechende Öffnung des Filtergehäuses 1, die durch einen Mittelsteg 22 zweigeteilt ist.

In einem zur Frontscheibe 14 führenden Abschnitt 3b der Stirnwand 3 ist das Filtergehäuse 1 mit einem ein Scharnier 19 tragenden Wandabschnitt 20 befestigt. Über das Scharnier 19 ist eine Klappe 21 an dem Filtergehäuse 1 angelenkt. Zwischen dem Wandabschnitt 20 und dem abgewinkelten Ende 17 der Seitenwand 16 des Filtergehäuses 1 weist das Filtergehäuse 1 den abgewinkelten Mittelsteg 22 auf, dessen Kontur der Kontur der Stirnwand 3 entspricht. Der Mittelsteg 22 verläuft parallel zu dem abgewinkelten Ende 17 und verbindet in der Fig. 1 nicht gezeigte Längsabschnitte des Anlagerahmens 18.

Innerhalb des Filtergehäuses 1 befindet sich ein quaderförmiger Pollenfilter 23, der mit einer Stirnseite 23a an einer Innenseite 24a eines ersten Abschnitts 24 des Mittelsteges 22 anliegt. Mit einer von einer zweiten Stirnseite 23b und einer Seitenfläche 23c gebildeten Kante 23e findet der Pollenfilter 23 Anschlag an einer Innenseite 16b der Seitenwand 16 des Filtergehäuses 1 in einem den maulartigen Abschnitt 10 zur Frontscheibe 14 hin überragenden Abschnitt 16c.

Zwischen dem Mittelsteg 22 und dem Anlagerahmenteil 17 bildet die Öffnung 2 der Stirnwand 3 eine Ansaugöffnung für ein an das Filtergehäuse 1 in den Innenraum 4 des Kraftfahrzeuges angeflanschtes Gebläse 26. Das Gebläsegehäuse 27 ist über Dichtungen 28a, 28b an dem Mittelsteg 22 und dem Anlagerahmenteil 17 angebracht.

Die schwenkbare Klappe 21 ist in einer ersten Stellung durch eine Schwenkbewegung in Richtung des Pfeils c nach Fig. 1 festlegbar, in der sie eine vom Anschlagrahmen 18 zwischen dem Mittelsteg 22 und dem Rahmenabschnitt 20 vorhandene Umluftöffnung 29 verschließt. In dieser ersten Stellung der Klappe 21 ist eine Frischluftöffnung 30, die in einer rechtwinklig von dem Anlagerahmen 18 in den Zwischenraum 5 vortretenden weiteren Seitenwand 31 des Filtergehäuses 1 angebracht ist, freigegeben. Dies ermöglicht den Durchzug von in den Zwischenraum 5 von außen in Richtung des Pfeils a eintretender Frischluft durch den Pollenfilter 23 bis zum Gebläse 26.

Die Klappe 21 ist durch eine Schwenkbewegung in Richtung des Pfeils d in einer zweiten Stellung derart festgelegt, dass sie die Frischluftöffnung 30 abdeckt. In dieser zweiten Stellung tritt Umluft in Richtung des Pfeils b aus dem Innenraum 4 des Kraftfahrzeuges in das Filtergehäuse 1 ein und durchsetzt den Pollenfilter 23. Beim Betrieb des Gebläses 26 saugt das Gebläse 26 durch den Pollenfilter 23 Umluft durch die Umluftöffnung 29 ein.

Die Seitenwand 16 und die weitere Seitenwand 31 bilden einen obeliskartigen, die Seitenflächen 23c, 23d des Pollenfilters 23 teilweise umgebenden Teil des Filtergehäuses 1. Die Deckfläche des obeliskartigen Teils des Filtergehäuses 1 ist als Wechselöffnung 32 für den Pollenfilter 23 ausgeführt. Die Wechselöffnung 32 ist mit einer an der Seitenwand 16 angelenkten Abdeckklappe 33 verschließbar. Die Abdeckklappe 33 ist mit einem abgebogenen Ende 33a hinter einem abgebogenen Ende 31a der weiteren Seitenwand 31 festlegbar. Nach dem Öffnen der Abdeckklappe 33 kann der Pollenfilter 23 aus dem Filtergehäuse 1 in den Zwischenraum 5 entnommen werden.

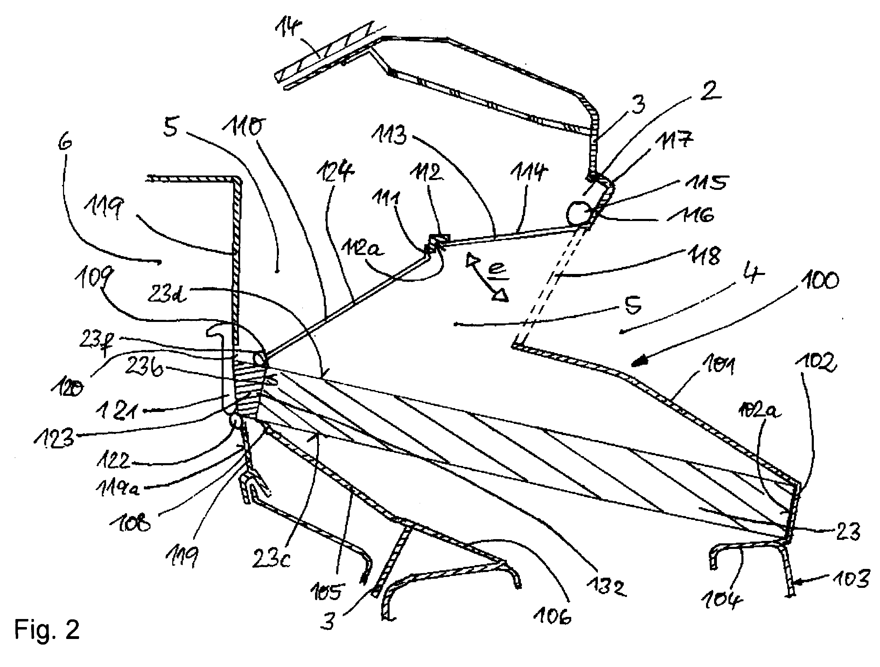

Gemäß Fig. 2 ist in einer weiteren Ausführungsform des Filtergehäuses 100 der Pollenfilter 23 so gehalten, dass er sich teilweise im Zwischenraum 5 und teilweise im Innenraum 4 befindet. Das Filtergehäuse 100 weist einen sich an eine Umluftöffnung 118 anschließenden, im Wesentlichen L-förmigen Vorsprung 101 auf, der die Öffnung 2 in Richtung auf den Innenraum 4 des Kraftfahrzeuges durchdringt. An einer Innenseite 102a eines Fußabschnittes 102 des Vorsprungs 101 liegt der Pollenfilter 23 an. An den Fußabschnitt 102 schließt sich ein mit dem Filtergehäuse 100 integriertes, nur ausschnittsweise gezeigtes Gebläsegehäuse 103 mit einem Gehäuseschenkel 104 luftdicht an. Eine Seitenwand 105 des Filtergehäuses 100 durchstößt die Öffnung 2 der Stirnwand 3 unterhalb des Pollenfilters 23 und verlängert sich in eine Gehäusewand 106 des Gebläsegehäuses 103.

An einem in den Innenraum 107 des Filtergehäuses 100 abgebogenen Endabschnitt 108 der Seitenwand 105 liegt der den Innenraum 107 des Filtergehäuses 100 durchsetzende Pollenfilter 23 mit der Seitenfläche 23c im zur Stirnseite 23b auslaufenden Abschnitt auf dem Endabschnitt 108 auf. Eine von der zweiten Seitenfläche 23d und der Stirnseite 23b des Pollenfilters 23 gebildete Kante 23f liegt an einem Scharnier 109 des Filtergehäuses 100 an. An das Scharnier 109 ist in Richtung zum Innenraum 4 eine Abdeckklappe 110 angelenkt. In einer in der Fig. 2 durch ausgezogene Linien dargestellten Schwenkendstellung liegt die Abdeckklappe 110 mit einem abgewinkelten Anlageabschnitt 111 an einer Profilschiene 112 des Filtergehäuses 100 an. Dabei verschließt die Abdeckklappe 110 eine Wechselöffnung 124. Der Pollenfilter 23 kann zur Reinigung oder zum Austausch gegen einen unbenutzten Pollenfilter 23 nach Öffnen der Abdeckklappe 110 durch die Wechselöffnung 124 in den Zwischenraum 5 entnommen werden.

Die rechtwinklig geformte Profilschiene 112 des Filtergehäuses 100 begrenzt eine Seite einer Frischluftöffnung 113 des Filtergehäuses 100. Gleichzeitig nimmt die Profilschiene 112 an einer den rechten Winkel umgebenden Seite 112a eine Klappe 114 in einer ersten Schwenkendstellung auf. Die Klappe 114 ist an einem an einem Abschnitt 116 eines Anlagerahmens 117 des Filtergehäuses 100 vorgesehenen Scharnier 115 angelenkt und in Richtung des Doppelpfeils e schwenkbar. In der ersten Schwenkendstellung (Fig. 2) verschließt die Klappe 114 die Frischluftöffnung 113 des Filtergehäuses 100. Dabei ist gleichzeitig die von dem Abschnitt 116 und dem L-förmigen Vorsprung 101 des Filtergehäuses 100 begrenzte Umluftöffnung 118 freigegeben und kann von Umluft aus dem Innenraum 4 des Kraftfahrzeuges durchströmt werden. In einer zweiten in Fig. 2 durch gestrichelte Linien angedeuteten Schwenkendstellung verschließt die Klappe 114 die Umluftöffnung 118 und legt die Frischluftöffnung 113 zum Durchzug von Frischluft frei.

Zwischen dem Scharnier 109 und dem abgebogenen Endabschnitt 108 der Seitenwand 105 befindet sich eine dem Querschnitt des Pollenfilters 23 angepasste weitere Wechselöffnung 123. Eine den Zwischenraum 5 zum Motorraum 6 begrenzende Schottwand 119 weist nach Fig. 2 eine Austauschöffnung 120 auf. Die Austauschöffnung 120 befindet sich in der Schottwand 119 in einer der Stirnseite 23b des in das Filtergehäuse 100 eingesetzten Pollenfilters 23 und der weiteren Wechselöffnung 123 entsprechenden Position. Die Austauschöffnung 120 ist mit einer Abdeckklappe 121 verschließbar, die mit einem Filmscharnier 122 an der zum Motorraum 6 hin gewandten Seite 119a der Schottwand 119 schwenkbeweglich angelenkt ist. Die Abdeckklappe 121 ist etwa mit einer nicht dargestellten vorgespannten Feder in der in der Fig. 2 an Hand von ausgezogenen Linien dargestellten Schließposition gehalten. Auf einer dem Zwischenraum 5 zugewandten Seite weist die Abdeckklappe 121 eine die Austauschöffnung 120 durchsetzende an der Stirnseite 23b des eingesetzten Pollenfilters 23 luftdicht anliegende Dichtung 123 auf. Der Pollenfilter 23 wird aus dem Filtergehäuse 100 nach dem Öffnen der Abdeckklappe 121 durch die Austauschöffnung 120 und die weitere Wechselöffnung 132 in den Motorraum entnommen.

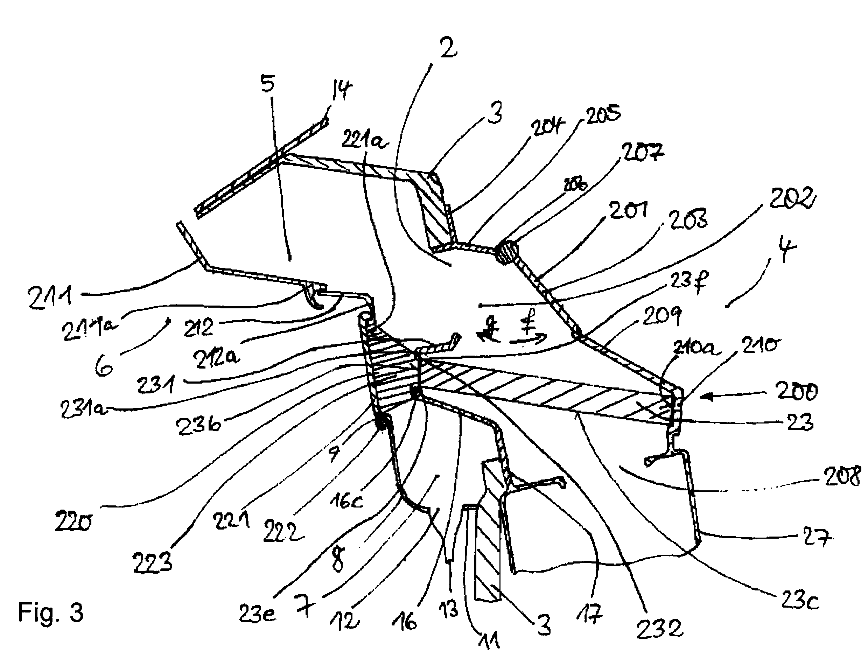

Eine in Fig. 3 dargestellte weitere Ausführungsform des Filtergehäuses 200 ist so in die Öffnung 2 der Stirnwand 3 eingesetzt, dass sich eine jeweils von einer Klappe 201 abdeckbare Frischluft- 202 und Umluftöffnung 203 des Filtergehäuses 200 im Innenraum 4 des Kraftfahrzeuges befinden. Von einem Anlagerahmen 204 des Filtergehäuses 200 steht etwa rechtwinkelig in den Innenraum 4 des Kraftfahrzeuges eine Gehäusewand 205 vor. An einem freien Ende 206 der Gehäusewand 205 ist ein Scharnier 207 angebracht, an dem die Klappe 201 gemäß der Pfeile f, g in Fig. 3 schwenkbeweglich angelenkt ist.

Durch die Umluft- 203 oder die Frischluftöffnung 202 eintretende Luft durchsetzt den Pollenfilter 23 auf dem Weg zu einer Eintrittsöffnung 208 des Gebläsegehäuses 27. Zwischen dem Gebläsegehäuse 27 und der Umluftöffnung 203 weist das Filtergehäuse 200 nach Fig. 3 einen Gehäuseabschnitt 209 auf, dessen abgewinkelter Fußabschnitt 210 den Pollenfilter 23 über dessen Stirnseite 23a mit einer Innenseite 210a stützend aufnimmt. Die Kanten 23e, 23f des Pollenfilters 23 an dessen Stirnseite 23b liegen jeweils an ins Innere des Filtergehäuses 200 abgewinkelten Enden 16c beziehungsweise 231a der Seitenwand 16 beziehungsweise einer weiteren Seitenwand 231 an. Die abgewinkelten Enden 16c und 231a begrenzen eine weitere, dem Filterwechsel dienende Wechselöffnung 232.

Eine den Zwischenraum 5 und den Motorraum 6 des Kraftfahrzeuges trennende, aus Kunststoff gefertigte Abdeckwand 211 ist mit einem maulförmigen Endabschnitt 211a auf ein Wandelement 212 geschoben. Ein abgewinkeltes Ende 212a des Wandelementes 212 und die den muldenartigen Bereich 7 begrenzende Wand 8 umgeben eine Austauschöffnung 220. Die Austauschöffnung 220 ist mit einer Abdeckklappe 221 verschließbar, die mit einem an dem abgewinkelten Ende 9 der Wand 8 befestigten Scharnier 222 angelenkt ist. An einer Innenseite 221a der Abdeckklappe 221 ist eine Dichtung 223 vorgesehen. In der in der Fig. 3 gezeigten Schwenkendstellung der Abdeckklappe 221 dichtet die Dichtung 223 die Austauschöffnung 220 in das Filtergehäuse 200 durch die weitere Wechselöffnung 232 hindurch bis zur Stirnseite 23b des Pollenfilters 23 luftdicht ab. Nach Öffnen der Abdeckklappe 221 kann der Pollenfilter 23 durch die Öffnung 220 und die weitere Wechselöffnung 232 des Filtergehäuses 200 zum Austausch und Ersatz durch einen unbenutzten Pollenfilter in den Motorraum 6 entnommen werden.

### Bezugszeichenliste

- 1: Filtergehäuse
- 2: Öffnung
- 3: Stirnwand
- 4: Innenraum
- 5: Zwischenraum
- 6: Motorraum
- 7: muldenartiger Bereich
- 8: Wand
- 9: Ende von 8
- 10: Abdeckwand
- 10a: Endabschnitt von 10
- 10b: Ende von 10
- 11: Bodenabschnitt
- 12: Öffnung in 11
- 13: Ablaufschlauch
- 14: Frontscheibe
- 14a: Ansatzbereich von 14
- 15: Abdeckung
- 15a: Scharnier
- 16: Seitenwand
- 16a: Außenseite von 16
- 16c: Ende von 16
- 17: Ende von 16
- 18: Anlagerahmen
- 19: Scharnier
- 20: Wandabschnitt
- 21: Klappe
- 22: Mittelsteg
- 23: Pollenfilter
- 23a: Stirnseiten von 23
- 23b: Stirnseiten von 23
- 23c: Seitenflächen von 23
- 23d: Seitenflächen von 23
- 23e: Kante von 23
- 23f: Kante von 23
- 24: erster Abschnitt v. 22
- 24a: Innenseite von 24
- 26: Gebläse
- 27: Gebläsegehäuse
- 29: Umluftöffnung
- 30: Frischluftöffnung
- 31: Seitenwand
- 32: Wechselöffnung
- 32a: Ende von 32
- 33: Abdeckklappe

- 100: Filtergehäuse
- 101: Vorsprung
- 102: Fußabschnitt
- 103: Gebläsegehäuse
- 104: Gehäuseschenkel
- 105: Seitenwand
- 106: Gehäusewand
- 107: Innenraum
- 108: Endabschnitt von 105
- 109: Scharnier
- 110: Abdeckklappe
- 111: Anlageabschnitt
- 112: Profilschiene
- 112a: Seite von 112
- 113: Frischluftöffnung
- 114: Klappe
- 115: Scharnier
- 116: Abschnitt von 117
- 117: Anlagerahmen
- 118: Umluftöffnung
- 119: Schottwand
- 119a: Seite von 119
- 120: Austauschöffnung
- 121: Abdeckklappe
- 122: Filmscharnier
- 123: Dichtung
- 124: Wechselöffnung
- 132: Wechselöffnung

- 200: Filtergehäuse
- 201: Klappe
- 202: Frischluftöffnung
- 203: Umluftöffnung
- 204: Anlagerahmen
- 205: Gehäusewand
- 206: freies Ende von 205
- 207: Scharnier
- 208: Eintrittsöffnung
- 209: Gehäuseabschnitt
- 210: Fußabschnitt
- 210a: Innenseite
- 211: Abdeckwand
- 211a: maulförmiger Endabschnitt von 211
- 212: Wandelement
- 212a: Ende von 212
- 220: Austauschöffnung
- 221: Abdeckklappe
- 221a: Innenseite
- 222: Scharnier
- 223: Dichtung
- 231: Seitenwand
- 231a: Ende von 231
- 232: Wechselöffnung

## Patentansprüche

1. Filtergehäuse (1, 100, 200) für ein Kraftfahrzeug mit einem das Filtergehäuse (1, 100, 200) durchsetzenden Filter (23), mit einer jeweils wahlweise verschließ- und freigebbaren Frisch- und Umluftöffnung (113, 30, 202 und 118, 29, 203) und mit einer Luftauslassöffnung, wobei der Filter (23) zwischen der Frisch- und Umluftöffnung (113, 30, 202 und 118, 29, 203) und der Luftauslassöffnung (2, 208) angeordnet ist und das Filtergehäuse (1, 100, 200) von einer Öffnung (2) in einer einen Innenraum (4) des Kraftfahrzeuges zu einem dem Motorraum (6) zugewandten Zwischenraum (5) abgrenzenden Stirnwand (3) aufgenommen ist, **dadurch gekennzeichnet, dass** die Frischund Umluftöffnung (113, 30, 202 und 118, 29, 203) mit einer Klappe (21, 114, 201) verschließbar sind und dass sich die Klappe (21, 114, 201) zum Schließen und/oder Freigeben der Umluft- und/oder der Frischluftöffnung (113, 30, 202 u/o 118, 29, 203) nicht durch die Öffnung (2) der Stirnwand (3) hindurchbewegt.

2. Filtergehäuse nach Anspruch 1, **dadurch gekennzeichnet, dass** sich ein die Frisch- (113, 30) und Umluftöffnung (118, 29) enthaltender Teil des Filtergehäuses (1, 100) außerhalb des Innenraums (4) befindet.

3. Filtergehäuse nach Anspruch 1, **dadurch gekennzeichnet, dass** sich ein die Frisch- (202) und Umluftöffnung (203) enthaltender Teil des Filtergehäuses (200) innerhalb des Innenraums (4) befindet.

4. Filtergehäuse nach einem der Ansprüche 1 bis 3, **dadurch gekennzeichnet, dass** die Klappe (21, 114, 201) in einer ersten Stellung, in der sie die Umluftöffnung (118, 29, 203) verschließt und die Frischluftöffnung (113, 30, 202) freigibt, und in einer zweiten Stellung festlegbar ist, in der sie die Umluftöffnung (118, 29, 203) freigibt und die Frischluftöffnung (113, 30, 202) verschließt.

5. Filtergehäuse nach einem der Ansprüche 1 bis 4, **dadurch gekennzeichnet, dass** der Filter (23) das Filtergehäuse (1) im Zwischenraum (5) durchsetzt.

6. Filtergehäuse nach einem der Ansprüche 1 bis 4, **dadurch gekennzeichnet, dass** der Filter (23) das Filtergehäuse (100, 200) in dem Bereich der Öffnung (2) der Stirnwand (3) durchsetzt.

7. Filtergehäuse nach einem der Ansprüche 1 bis 6, **dadurch gekennzeichnet, dass** der Filter (23) durch eine Wechselöffnung (32, 124) des Filtergehäuses (1, 100) in dem Zwischenraum (5) aus dem Filtergehäuse (1, 100) entnehmbar und/oder in das Filtergehäuse (1, 100) einbringbar ist.

8. Filtergehäuse nach Anspruch 7, **dadurch gekennzeichnet, dass** die Wechselöffnung (32, 124) durch eine Abdeckklappe (33, 110) verschließbar ist.

9. Filtergehäuse nach einem der Ansprüche 1 bis 8, **dadurch gekennzeichnet, dass** der Filter (23) aus dem Filtergehäuse (100, 200) durch eine weitere Wechselöffnung (132, 232) in den Motorraum (6) entnehmund/oder in das Filtergehäuse (100, 200) einbringbar ist.

10. Filtergehäuse nach einem der Ansprüche 1 bis 9, **dadurch gekennzeichnet, dass** der Filter (23) durch eine in einer den Zwischenraum (5) und den Motorraum (6) des Kraftfahrzeuges trennenden Wand (119, 212, 6) angebrachten Austauschöffnung (120, 220) entnehmund/oder einbringbar ist, wobei die Austauschöffnung (120, 220) der weiteren Wechselöffnung (132, 232) gegenüberliegt.

11. Filtergehäuse nach Anspruch 10, **dadurch gekennzeichnet, dass** die weitere Wechselöffnung (132, 232) und/oder die Austauschöffnung (120, 220) durch eine Abdeckklappe (121, 221) verschließbar sind.

12. Filtergehäuse nach einem der Ansprüche 1 bis 11, **dadurch gekennzeichnet, dass** der Filter (23) das Filtergehäuse (1, 100, 200) dort durchsetzt, wo das Filtergehäuse (1, 100, 200) den größten Querschnitt (31a, 16c, 109, 108, 231a, 16c u. 24, 102, 210) aufweist.

13. Filtergehäuse nach einem der Ansprüche 1 bis 12, **dadurch gekennzeichnet, dass** das die Luftauslassöffnung (2, 208) zum Anschluss eines Gebläses (26) ausgebildet ist.

14. Filtergehäuse nach einem der Ansprüche 1 bis 13, **dadurch gekennzeichnet, dass** die Klappe (21, 114, 201) zum wechselseitigen Verschließen und Öffnen der Umluft- (29, 118, 203) und der Frischluftöffnung (30, 113, 202) durch einen Stellmotor angetrieben wird.

15. Filtergehäuse nach einem der Ansprüche 1 bis 14, **dadurch gekennzeichnet, dass** der Filter (23) als Pollenfilter und/oder Staubfilter ausgelegt ist.

16. Filtergehäuse nach einem der Ansprüche 1 bis 15, **dadurch gekennzeichnet, dass** um die Frischluftöffnung (30) ein Wasserabweiser (15) angebracht ist.
